# EUROPEAN PATENT SPECIFICATION

(11) **EP 0 947 476 B1**
(45) Date of publication and mention of the grant of the patent: **19.06.2002**
(21) Application number: 99102831.7
(22) Date of filing: 26.02.1999
(51) Int. Cl.: C03C 4/02, C03C 3/087, C03C 4/08

(54) **Ultraviolet/infrared absorbent low transmittance glass**
Ultraviolett/Infrarot absorbierendes Glas mit niedriger Durchlässigkeit
Verre à faible transmission absorbant les rayonnements ultraviolets/infrarouges

(30) Priority: 25.03.1998 JP 7757098
(43) Date of publication of application: 06.10.1999
(73) Proprietor: Nippon Sheet Glass Co., Ltd., Osaka-shi, Osaka (JP)
(72) Inventor: Seto, Hiromitsu, c/o NIPPON SHEET GLASS CO., LTD., Osaka-shi, Osaka (JP); Nagashima, Yukihito, c/o NIPPON SHEET GLASS CO.,, Osaka-shi, Osaka (JP); Yoshii, Shigekazu, c/o NIPPON SHEET GLASS CO.,, Osaka-shi, Osaka (JP)
(74) Representative: Kraus, Walter, Dr.

(56) References cited:
- EP-A- 0 653 388
- EP-A- 0 825 156
- US-A- 5 308 805
- PATENT ABSTRACTS OF JAPAN vol. 006, no. 197 (C-128), 6 October 1982 (1982-10-06) -& JP 57 106537 A (NIPPON SHEET GLASS CO LTD), 2 July 1982 (1982-07-02)

## Description

### BACKGROUND OF THE INVENTION AND RELATED ART STATEMENT

The present invention relates to an ultraviolet/infrared absorbent low transmittance glass. More particularly, it relates to an ultraviolet/infrared absorbent low transmittance glass which has an almost neutral color such as greenish gray shade and which has low visible light transmittance, low solar energy transmittance, and low ultraviolet transmittance, so that it is useful for windows of vehicles or buildings particularly for a privacy protecting glass in a rear window of a vehicle.

Recently, a variety of glasses with ultraviolet/infrared absorptivity to be used as a vehicle windshield have been proposed with the view of preventing degradation of luxurious interior materials and reducing cooling load of the vehicle. In view of privacy protection, glass with relatively low visible light transmittance is preferably used for a rear window glass of a vehicle. Such kinds of glass include the followings.

For example, a dark gray colored infrared absorbent glass disclosed in Japanese Patent H7-29813B consists of soda-lime-silica glass including colorants consisting of 1.00 to 1.7 weight percent Fe₂O₃ (total iron), at least 0.27 weight percent FeO, 0.002 to 0.005 weight percent Se, and 0.01 to 0.02 weight percent CoO. The glass exhibits luminous transmittance less than 32 percent and total solar infrared transmittance less than 15 percent at 3.9 mm thickness.

A dark gray colored glass disclosed in Japanese Patent H8-157232A consists of soda-lime-silica glass including colorants consisting of 0.8 to 1.4 weight percent Fe₂O₃ (total iron), less than 0.21 weight percent FeO, 0.05 to 1.0 weight percent TiO₂, 0.02 to 0.05 weight percent CoO, and 0.0005 to 0.015 weight percent Se.

A neutral gray colored glass disclosed in claim 25 of U.S. Patent No. 5,393,593 consists of soda-lime-silica glass including colorants consisting of 1.00 to 2.2 weight percent Fe₂O₃ (total iron), at least 0.20 weight percent FeO. 0.0005 to 0.005 weight percent Se, and 0.010 to 0.030 weight percent CoO. The glass exhibits luminous transmittance less than 35 percent and total solar infrared transmittance less than 20 percent at 3.9 mm thickness.

A glass disclosed in PCT (Japanese phase) H7-508971 consists of soda-lime-silica glass including colorants consisting of 1.3 to 2.0 weight percent of Fe₂O₃ (total iron), about 0.01 to 0.05 weight percent of NiO, about 0.02 to 0.04 weight percent of Co₃O₄, about 0.0002 to 0.003 weight percent of Se and having a ferrous iron value of 18 to 30 weight percent and less than 0.53 of a light and shade coefficient.

In both the dark gray colored infrared absorbent glass disclosed in Japanese Patent H7-29813B and the neutral gray colored glass disclosed in U.S. Patent No. 5,393,593, a great quantity of Se is used for providing a desirable color. Such a great quantity of Se is unpreferable for the environment because Se has toxicity and is easy to vaporize. The above dark gray glass disclosed in Japanese Patent H8-157232A including 0.05 to 1.0 weight percent TiO₂ as an essential component is unpreferable because TiO₂ is expensive to increase the batch cost.

The aforementioned glass includes selenium in high concentration to provide optical properties, without essentially including nickel.

The glass disclosed in PCT (Japanese phase) H7-508971 is prepared from standard soda-lime-silica glass to which iron oxide, cobalt oxide, nickel oxide and selenium are added in a specific ratio. However, the glass composition disclosed therein has a great content of selenium and small of nickel oxide.

European patent application EP 0 825 156 A1 describes an ultra-violet/infrared absorbent low transmittance glass having an almost neutral color such as turquoise blue and deep green and exhibiting low or middle visible light transmittance, low total solar energy transmittance, and low ultraviolet transmittance, which glass consists of base glass comprising: 65 to 80 wt. % SiO₂; 0 to 5 wt. % Al₂O₃; 0 to 10 wt. % MgO; 5 to 15 wt. % CaO (within such a range that total amount of MgO and CaO becomes 5 to 15 wt. %); 10 to 18 wt. % Na₂O; 0 to 5 wt. % K₂O (within such a range that total amount of Na₂O and K₂O becomes 10 to 20 wt. %); and 0 to 5 wt. % B₂O₃, and colorants including: 1.2 to 2.2 wt. % total iron oxide (T-Fe₂O₃) converted to Fe₂O₃; 0.001 to 0.03 wt. % CoO; 0 to 0.0008 % Se; and 0 to 0.2 % NiO.

European patent application EP 0 653 388 A1 describes a glass composition having a neutral gray color and a luminous (visible) transmittance within a range that allows the glass to be used as privacy glazing in a vehicle. The base glass is a soda-lime-silica composition and iron, cobalt, selenium and/oder nickel are added as colorants. In one particular embodimet of the invention, a neutral gray colored glass with a luminous transmittance (C.I.E. illuminant A) ranging from 20% to 50% at a thickness of 3.9 millimeters may be attained by using as colorants: 0.15 to 1.2 wt. % of the total glass Fe₂O₃ (total iron), no greater than 0.30 wt. % FeO, 60-180 ppm CoO, 0-30 ppm Se, and 0-550 ppm NiO.

### OBJECT AND SUMMARY OF THE INVENTION

It is an object of the present invention to provide an ultraviolet/infrared absorbent low transmittance glass which has an almost neutral color such as greenish gray and which has low visible light transmittance, low solar energy transmittance and low ultraviolet transmittance so that it is useful for a window of a vehicle or a building particularly for a privacy protecting glass of a rear window of a vehicle.

The ultraviolet/infrared absorbent low transmittance glass of the present invention consists of a base glass, that is, the major constituents comprising:
65 to 80 wt. % SiO₂;
0 to 5 wt. % Al₂O₃;
0 to 10 wt. % MgO;
5 to 15 wt. % CaO wherein a total amount of MgO and CaO is between 5 and 15 wt. %;
10 to 18 wt. % Na₂O;
0 to 5 wt. % K₂O wherein a total amount of Na₂O and K₂O is between 10 and 20 wt. %; and
0 to 5 wt. % B₂O₃,
and a colorant including:
1.1 to 1.5 wt. % total iron oxide (T-Fe₂O₃) expressed as Fe₂O₃; 0.01 to 0.019 wt. % CoO;
0.001 wt. % to 0.003 wt. % Se; and
0.055 to 0.1 wt. % NiO.

When it is measured by using C.I.E. standard illuminant "A", the glass with a thickness between 2 and 5 mm has a visible light transmittance (YA) in a range from 10 to 25 %, a solar energy transmittance (TG) in a range from 5 to 20 % and an ultraviolet transmittance (Tuv) of less than 15 %.

In the present invention, the desired color shade can be obtained with a smaller amount of Se, which is desired to be decreased in content because of its toxicity and volatility, and with a greater amount of NiO than the amount conventionally required. It has been understood conventionally that adding nickel to glass is unpreferable because of formation of nickel sulfide stones. However, the formation of nickel sulfide stones is more strongly dependent on the size of nickel grains added in the batch or redox of the glass than the concentration of NiO. When the concentration of NiO in the glass is too high, there is a possibility that NiO coagulates to form the nickel sulfide stones. However, When NiO is in a range defined by this invention, the desired color can be obtained without producing the nickel sulfide stones.

### PREFERRED EMBODIMENTS

The description will be made as regard to an ultraviolet/infrared absorbent low transmittance glass composition. It should be noted that components will be represented with percentage by weight.

SiO₂(silica) is a principal component for forming skeleton of glass. Less than 65% SiO₂ lowers the durability of the glass and more than 80% SiO₂ raises the melting temperature of the glass so high.

Al₂O₃ is a component for improving the durability of the glass. More than 5% Al₂O₃ raises the melting temperature of the glass so high. The preferable range of Al₂O₃ is between 0.1% and 2%.

MgO and CaO improve the durability of the glass and adjust a devitrification temperature and viscosity of the glass during molding. More than 10% MgO raises the devitrification temperature. Less than 5% or more than 15% CaO raises the devitrification temperature of the glass. The durability of the glass is lowered when the total amount of MgO and CaO is less than 5%, while the devitrification temperature is increased when the total exceeds 15%.

Na₂O and K₂O prompt the glass to melt. The efficiency of promotion of melting becomes poor when Na₂O is less than 10% or the total of Na₂O and K₂O is less than 10%, while the durability of the glass is lowered when Na₂O exceeds 18% or the total of Na₂O and K₂O exceeds 20%. K₂O is preferable not to exceed 5% because of its expensive cost.

B₂O₃ is a component for improving the durability of the glass, prompting to melt, and yet enhancing the ultraviolet absorption. B₂O₃ should be less than 5%, since difficulties during molding are caused due to the vaporization of B₂O₃ when B₂O₃ exceeds 5%.

Iron oxide is present in the form of Fe₂O₃ and the form of FeO in the glass. Fe₂O₃ is a component for improving the ultraviolet absorptivity and FeO is a component for improving the heat rays absorptivity.

When the total amount of iron oxide (T-Fe₂O₃) expressed as Fe₂O₃ is less than 1.1%, the efficiency of ultraviolet and infrared absorptivity becomes small so as not to provide desired optical properties. On the other hand, when T-Fe₂O₃ exceeds 1.5%, there is an unpreferable possibility that the temperature around a crown of a glass melting furnace exceeds its refractory temperature due to absorption of the heat rays by the ferrous oxide. In addition, in case of successively producing glasses by a glass melting furnace with T-Fe₂O₃ exceeding 1.5%, long time is required to alter a glass composition in the furnace.

Particularly more than 1.2% T-Fe₂O₃ can offer preferably sufficient efficiency of ultraviolet and infrared absorptivity.

Fe₂O₃ has a function of particularly increasing the absorptivity in ultraviolet range when glass is reinforced by air blast cooling. This means that the glass of this invention can obtain enough efficiency of ultraviolet absorptivity without using expensive ultraviolet absorbent such as CeO₂ and TiO₂. When T- Fe₂O₃ is in the range mentioned above, the desired color shade of the glass can be obtained after discoloration due to the reinforcement process by air blast cooling.

When the FeO/T-Fe₂O₃ ratio (a weight of FeO expressed as Fe₂O₃ against T-Fe₂O₃) is too low, the heat rays absorptivity can not be obtained sufficiently because of a small amount of FeO. Many bubbles are also formed in the molten glass because the molten glass is relatively oxidative so that the product yield is lowered. When the FeO/T-Fe₂O₃ ratio is too high, the visible light transmittance is reduced and the color is of a blue tint. In addition, nickel sulfide stones are sometimes present in the molten glass because the molten glass is relatively reductive. Too high ratio of FeO/T-Fe₂O₃ is also unpreferable since it causes streaks with enough silica and silica scum.

In the present invention, the FeO/T- Fe₂O₃ ratio in a range between 0.15 and 0.4 brings a green shade which is an almost neutral color having high ultraviolet absorptivity and high heat rays absorptivity. In this case, values expressed as Fe₂O₃ are used for the content of FeO.

CoO is a component for forming an almost neutral color such as greenish gray shade by cooperating with Se and/or NiO, and Fe₂O₃ for controlling the visible light transmittance. Less than 0.01% CoO can not form a desired color shade and makes the visible light transmittance too high. More than 0.019% CoO makes the color too blue tint and reduces the visible light transmittance.

Se contributes a pink color, so that it reduces the excitation purity with the aid of a complementary color of CoO. Less than 0.001% Se can not form a desired greenish gray shade, and more than 0.003% Se reduces the visible light transmittance. The content of Se is preferably in a range between 0.001% and 0.0018%.

NiO is a component for controlling the visible light transmittance and reducing the excitation purity as like as CoO. NiO has an absorptivity in a wide infrared range, so that it is a component for reducing the solar energy transmittance as like as FeO. Less then 0.055% NiO can not form a desired color shade. To reduce the solar energy transmittance requires a large amount of FeO which causes difficulties on the production of the glass. When NiO is more than 0.1%, nickel sulfide stones are sometimes present in the product and the visible light transmittance is reduced. In addition, the obtained shade becomes too greenish. When using NiO, the content thereof is preferably in a range between 0.06% and 0.1%.

It is known that the coordination number of NiO varies according to the rate of cooling glass so that the color of the glass varies. This is because the cooling varies the coordination number of oxide around Ni²⁺ from 6 into 4 and thus varies the optical absorption. The absorption of Ni²⁺ with octahedral coordination exists around 430 nanometers so as to contribute yellow to the glass, while the absorption of Ni²⁺ with tetrahedral coordination exists from 500 to 640 nanometers. Therefore, the excitation purity would be reduced to obtain the preferable shade by using Ni²⁺ with tetrahedral coordination.

A windshield of a passenger car is normally reinforced by air blast cooling for safety. The reinforcement process by air blast cooling improves the absorption of NiO with 4 coordinating atoms, and reduces the visible light transmittance. Although the reinforcement process by air blast cooling reduces the absorption of visible lights, the variations of NiO increases the absorption. The composition of the glass of the present invention is determined such that the optical properties of the glass after the reinforcement process fall in the desired range.

CeO₂ is a component for improving the ultraviolet absorptivity and is present in the form of Ce³⁺ or in the form of Ce⁴⁺ in glass. Particularly, Ce³⁺ is effective in absorbing ultraviolet with less absorptivity in the visible range. In the present invention, oxide of Ce³⁺ is also expressed in terms of CeO₂ and is included in the total amount of CeO₂.

TiO₂ is a component for improving the ultraviolet absorptivity particularly by interaction with FeO. TiO₂ can be added to improve the ultraviolet absorptivity within such a range as not to lose the almost neutral color such as greenish gray shade, or to add a yellow tint in order to obtain the desired color shade. The use of expensive CeO₂, TiO₂ increases the cost so that it is not preferable to use more than 2% CeO₂, TiO₂.

One or more than two among MnO, V₂O₅, MoO₃, CuO, Cr₂O₃, and the like may be added as colorant and SnO₂ within a rang from 0% to 1% in total may be added as a reducing agent in such a range as not to lose middle transmittance and the almost neutral color such as greenish gray shade. To further securely prevent the formation of nickel sulfide stones, ZnO may be added in a range from 0% to 1%.

In the present invention, the glass is preferable to be reinforced by the air blasting. The desired color shade and optical properties are obtained in the reinforced process when the glass has the composition of the present invention comprising NiO and Fe₂O₃ in the specific amount.

In the reinforcement process, the glass plate produced from the molten glass is reheated at 600 to 750°C for 2 to 5 minutes, and then, cooled by blasting air of 10 to 30°C at a cooling rate of 100 to 300°C/sec.

The air blasting reinforcement process makes the glass plate comprising NiO and Fe₂O₃ to have the greenish gray and almost neutral shade, and to have the low visible light transmittance and the low ultraviolet transmittance while keeping the high heat rays absorptivity.

In the present invention, when measured by using C.I.E standard illuminant "A", the glass with a thickness between 2 to 5 mm has a visible light transmittance (YA) in the range from 10% to 25%, a solar energy transmittance (TG) in the range from 5% to 20% and a ultraviolet transmittance (Tuv) defined by ISO of not greater than 15%, preferably not greater than 10%.

In case of using L* a* b* color system, the chromaticity, expressed by a* and b*, of the glass color are preferably in ranges of -10≦a*≦0 and -3 ≦b*≦7, respectively.

When the glass is used in a rear window of vehicle for the privacy protection, since almost neutral colored glass is particularly preferred, the chromaticity in ranges of -5≦a*≦0 and 0≦b*≦5.

When measured by using C.I.E. standard illuminant "C" over the wavelength range from 380 to 770 nanometers, the glass of the present invention preferably has optical properties with a dominant wavelength (λ d) in the range from 480 to 580 nanometers and a excitation purity (Pe) of less than 10%.

### [Examples]

Hereinafter, the mode of carrying out the present invention will be described referring to some examples.

### (Examples 1 through 9)

Glass raw material is prepared by adding required composition consisting of ferric oxide, titanium oxide, cerium oxide, cobalt oxide, metallic selenium, and nickel oxide into a standard soda-lime-silica glass batch composition, also adding carbonaceous reducing agent (concretely, coke powder etc.) at a ratio of about 0.01 parts by weight per 100 parts of the glass raw material therein, and mixing them. The glass raw material thus prepared is heated and melted in an electric furnace at 1500°C for 4 hours. The molten glass is flowed onto a stainless plate and annealed to the room temperature to obtain a 6mm thick glass plate. After polishing the glass plate in such a manner that the thickness reduces to 4 mm, the glass plate is reinforced with reheating it at 700°C for 5 minutes and then cooling it with 20°C air blast at 3.2 to 2.1 kgf/mm² wind flow to become a sample. Each sample is measured in the visible light transmittance by the C.I.E. illuminant A (YA), the solar energy transmittance (TG), the ultraviolet transmittance by ISO 9050(Tuv), the dominant wavelength by the illuminant C(λ d), and the excitation purity (Pe). And, L*, a* and b* is measured following C.I.E.L.A.B.

Tables 1 and 2 show base glass compositions of the obtained samples, T-Fe₂O₃ concentration, FeO (expressed as Fe₂O₃) concentration, FeO (expressed as Fe₂O₃)/ T-Fe₂O₃ rate, CoO concentration, Se concentration, NiO concentration, CeO₂ concentration, and TiO₂ concentration. The numerals in Tables are indicated as a percentage of the weight except that CoO concentration, Se concentration, and NiO concentration are expressed in ppm. Tables I and 2 also show the optical properties of the respective samples.

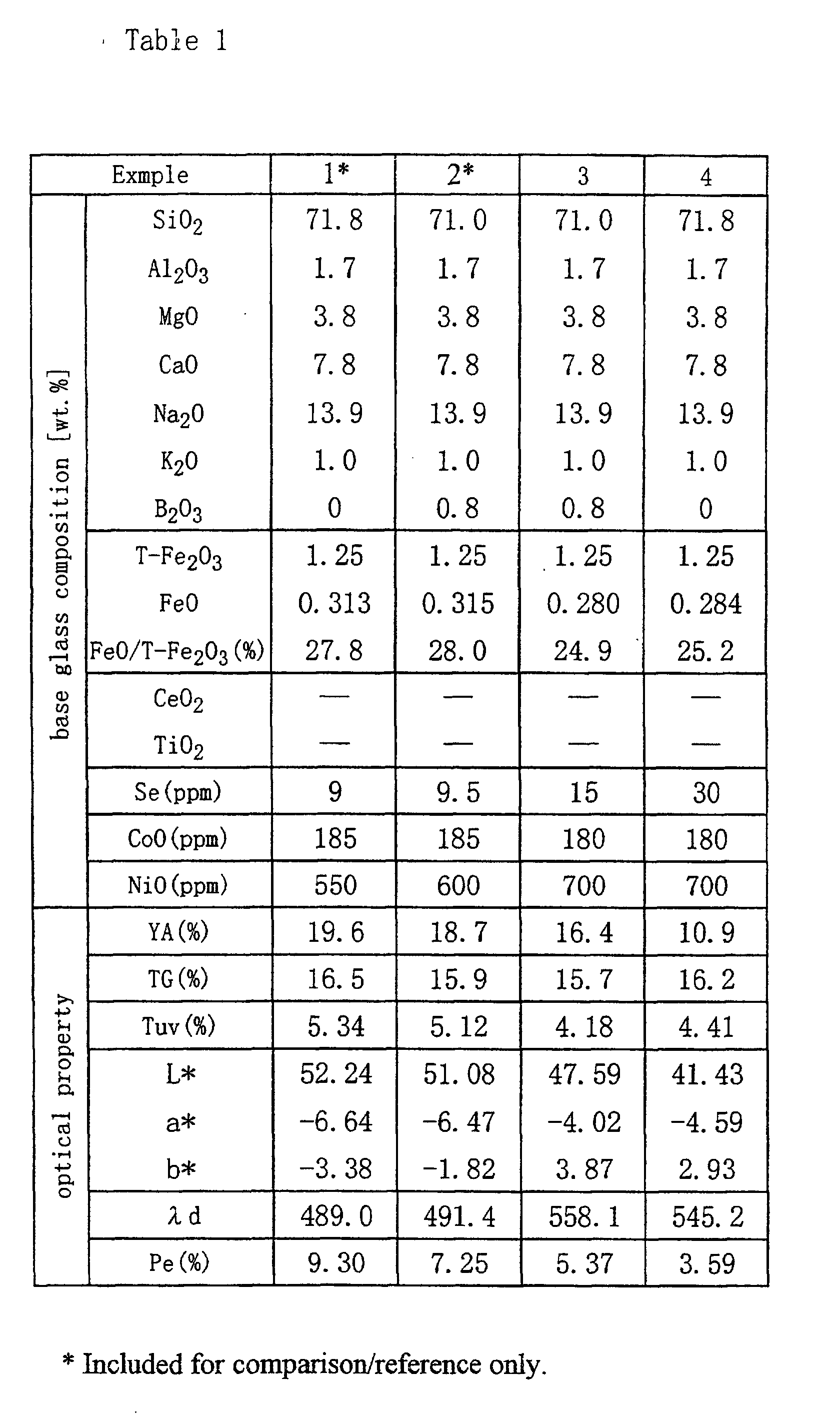

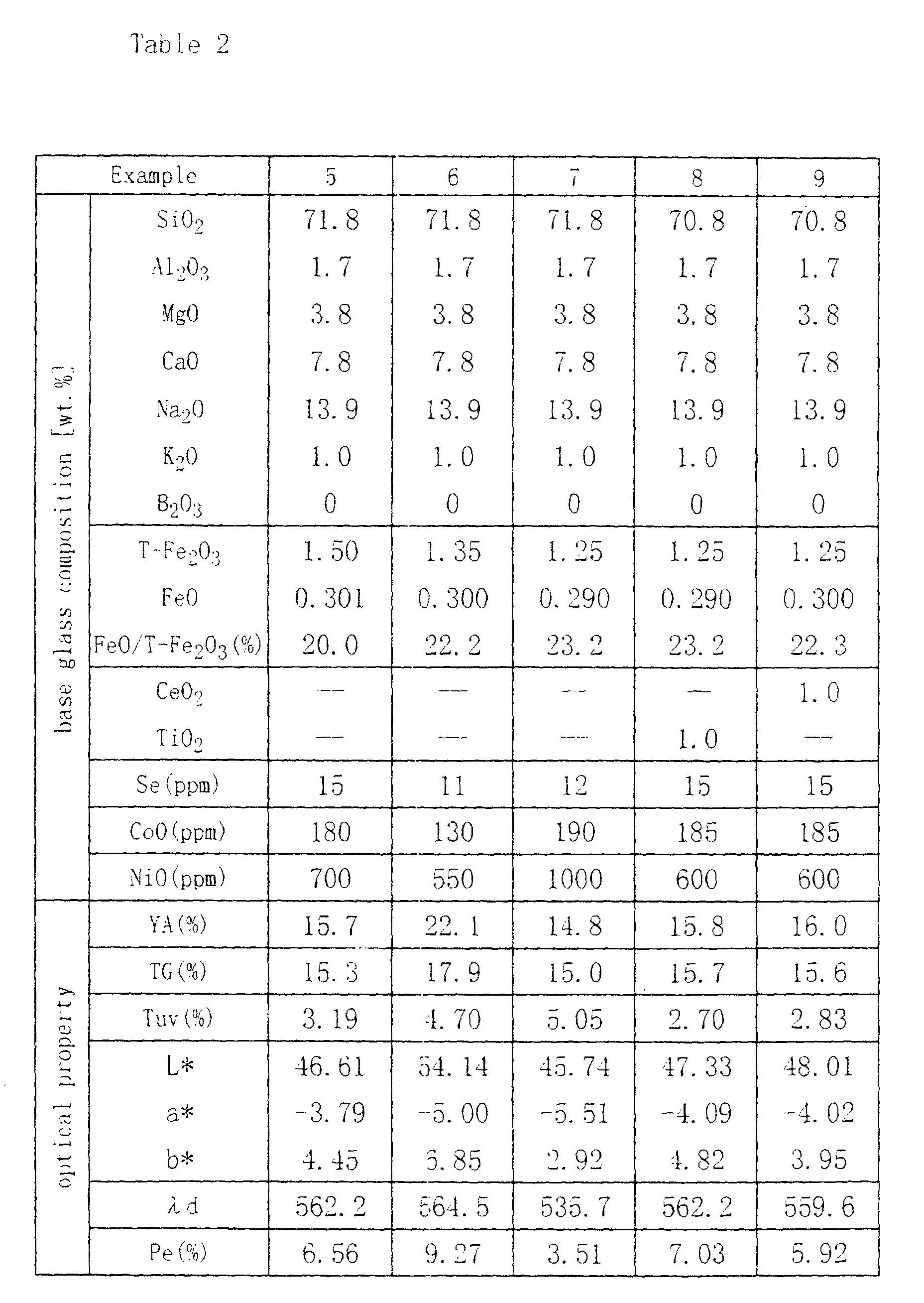

The compositions of the Examples 3-9 are within the scope of claims 1-3. Table 1 and 2 show that all of the samples of Examples 1 through 9 have the visible light transmittance (YA) between 10% and 25%, the solar energy transmittance (TG) between 5% and 20%, and the ultraviolet transmittance (Tuv) less than 15%.

These samples have the chromaticity expressed by a* and b* in ranges of -10≦a*≦0 and -3≦b*≦7 which fall in the range of claim 7, the dominant wavelength (λ d) measured by using the illuminant "C" between 480 and 580 nanometers, and excitation purity (Pe) of less than 10%.

Compared with the Example 1 or 2 (which are not within the scope of claim 1), the glasses of the Example 3-9 have large values of a* and have the preferable lighter green shade.

Examples 3 and 5-9 are within the scope of claim 4. Example 4 is not preferable in view of visibility because of its low visible light transmittance due to the large amount of Se.

Examples 3-5 and 7-9 are within the scope of claim 5. These glasses comprising the sufficient amount of NiO are shown to have preferable properties.

It is shown that Example 8 and 9 are within the scope of claim 6 and have the excellent high ultraviolet absorptivity.

Therefore, when the glass compositions of the examples mentioned above are used for windshields of vehicles and windows of buildings, good effects of preventing degradation of interior materials and of privacy protecting can be obtained.

### (Comparative Examples 1-5)

Table 3 shows glass components and optical properties of Comparative Examples which are made in the same manner as Examples 1-9 but the glass components are different.

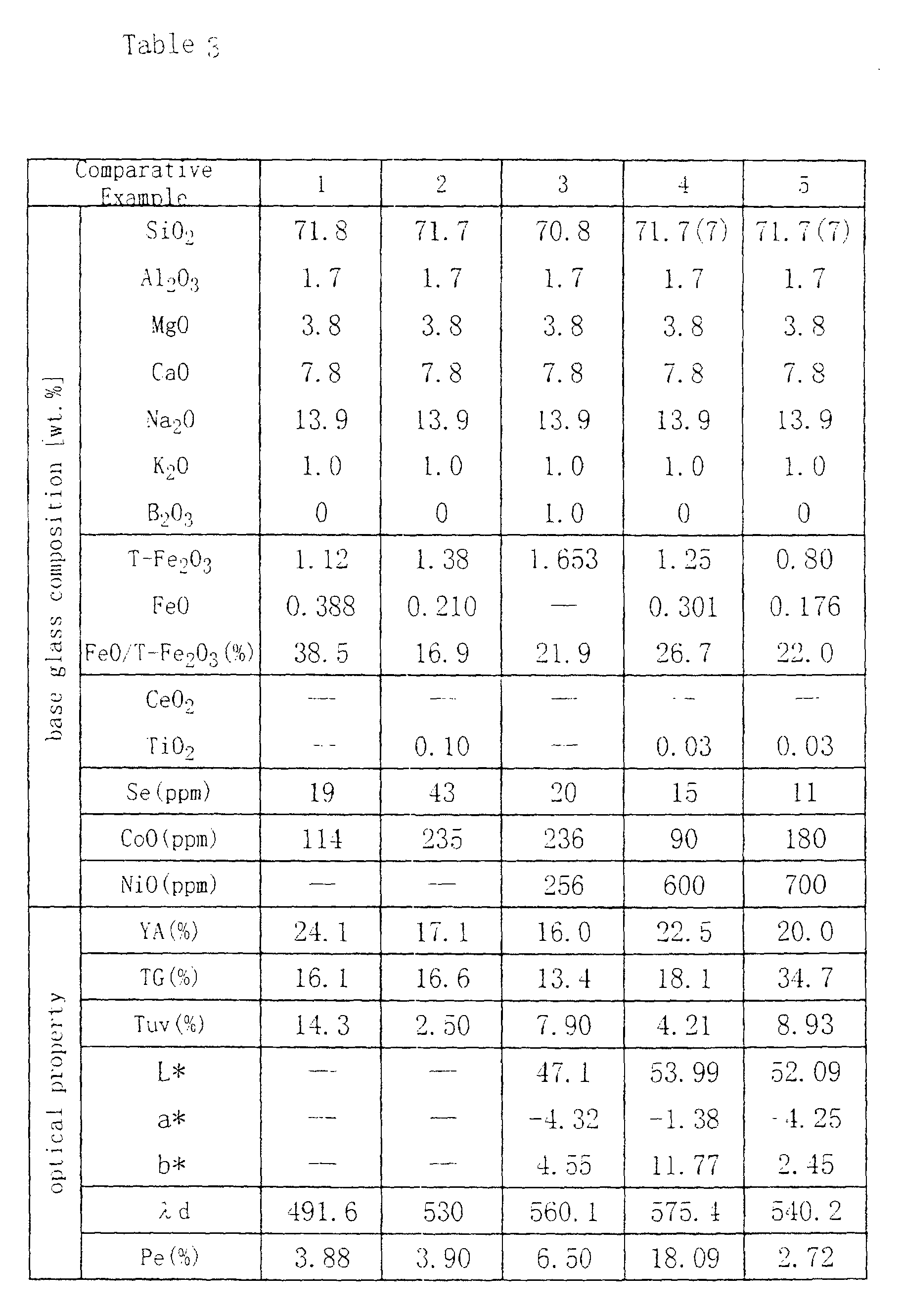

All of Comparative Examples 1-5 have compositions out of the range of the present invention. Comparative Example 1 has the same composition as the example of Japanese Patent H7-29813B, which shows the glass produced by the vacuum refining process, as referred in the prior art description. Comparative Example 2 has the same composition as the example of Japanese Patent H8-157232A as referred above. Comparative Example 3 has the same composition as the example of PCT (Japanese phase) H7-508971 as referred above.

It should be noted that the optical properties of Comparative Example 1 are indicated in values converted based on a glass thickness of 3.9 mm and the optical properties of Comparative Example 2 are indicated in values converted based on a glass thickness of 5 mm.

Comparative Example 4 contains CoO as a colorant of which amount is out of the scope of the present invention. Comparative Example 5 contains T-Fe₂O₃ amount of which is out of the scope of the present invention.

It is apparent from Table 3 that as compared with the examples of the present invention, Comparative Examples 1 has a very large value of FeO/T-Fe₂O₃ ratio in order to improve the heat rays absorptivity without including NiO. The glass of Comparative Example 1 is unpreferable to be produced in an ordinary melting furnace.

The glass of Comparative Examples 2 which does not comprise NiO is required to comprise a large amount of Se and CoO to provide the desirable color shade and optical properties.

Compared with the present invention, the glass of Comparative Example 3 comprising a low amount of NiO and a large amount of T-Fe₂O₃ has difficulties to be produced in ordinary melting furnace .

Comparative Examples 4 has an amount of CoO out of scope of the present invention, so that the obtained shade is unpreferablly yellow tint.

Comparative Examples 5 contains T-Fe₂O₃ an amount of which is out of the claimed range so that it can not obtain sufficient heat rays absorptibity

As detailed above, according to the present invention, an ultraviolet/infrared absorbent low transmittance glass, which exhibits low visible light transmittance, low solar energy transmittance, and low ultraviolet transmittance and which has greenish gray shade can be provided.

The ultraviolet/infrared absorbent low transmittance glass having the greenish gray shade can exhibit the effect of preventing degradation and discoloration of interior materials and the privacy protecting effect when the glass is used for a rear window glass of a vehicle, a window of a building, or the like.

## Claims

1. An ultraviolet/infrared absorbent low transmittance glass consisting of base glass comprising:
65 to 80 wt. % SiO₂;
0 to 5 wt. % Al₂O₃;
0 to 10 wt. % MgO;
5 to 15 wt. % CaO wherein a total amount of MgO and CaO is between 5 and 15 wt. %;
10 to 18 wt. % Na₂O;
0 to 5 wt. % K₂O wherein a total amount of Na₂O and K₂O is between 10 and 20 wt. %; and
0 to 5 wt. % B₂O₃,
and colorants comprising:
1.1 to 1.5 wt. % total iron oxide (T-Fe₂O₃) expressed as Fe₂O₃;
0.01 to 0.019 wt. % CoO;
0.001 wt.% to 0.003 wt. % Se; and
0.055 to 0.1 wt. % NiO,
Wherein said glass with a thickness between 2and 5 mm has a visible light transmittance (YA) by the C.I.E. illuminant "A" in a range from 10% to 25%, a solar energy transmittance (TG) in a range from 5% to 20%, an ultraviolet transmittance (Tuv) of not more than 15% specified by ISO.

2. An ultraviolet/infrared absorbent low transmittance glass as claimed in claim 1, wherein FeO expressed as Fe₂O₃ is between 15 wt. % and 40 wt. % of T-Fe₂O₃.

3. An ultraviolet/infrared absorbent low transmittance glass as claimed in claim 1, wherein T-Fe₂O₃ is between 1.2 wt. % and 1.5 wt. %.

4. An ultraviolet/infrared absorbent low transmittance glass as claimed in claim 1, wherein Se is between 0.001 wt. % and 0.0018 wt. %.

5. An ultraviolet/infrared absorbent low transmittance glass as claimed in claim 1, wherein NiO is between 0.06 wt. % and 0.1 wt. %.

6. An ultraviolet/infrared absorbent low transmittance glass as claimed in claim 1, wherein said colorant further comprises CeO₂ of no greater than 2 wt. % and/or TiO₂ of no greater than 2 wt. %.

7. An ultraviolet/infrared absorbent low transmittance glass as claimed in claim 1, wherein the glass has a color defined by the following C.I.E.L.A.B. coordinates -10≦a*≦0 and -3≦b*≦7, and an almost neutral color such as greenish gray.

8. An ultraviolet/infrared absorbent low transmittance glass as claimed in claim 1, wherein the glass is reinforced by air blast cooling.

9. An ultraviolet/infrared absorbent low transmittance glass as claimed in claim 1, wherein Al₂O₃ is between 0.1 wt. % and 2 wt. %.

10. An ultraviolet/infrared absorbent low transmittance glass as claimed in claim 8, wherein the glass plate produced from the molten glass is reheated at 600 to 750°C for 2 to 5 minutes and then cooled by blasting air of 10 to 30°C at a cooling rate of 100 to 300°C/sec in the reinforcement process.

11. An ultraviolet/infrared absorbent low transmittance glass as claimed in claim 6, wherein the glass has a color defined by the following C.I.E.L.A.B. coordinates -5≦a*≦0 and 0≦b*≦5.

12. An ultraviolet/infrared absorbent low transmittance glass as claimed in claim 1, wherein the glass has an ultraviolet transmittance of no greater than 10%.

13. An ultraviolet/infrared absorbent low transmittance glass as claimed in claim 1, wherein the glass with a thickness of 4 mm has a dominant wavelength of 480 to 580 nanometers with the using C.I.E. standard illuminant "C" over the wavelength range from 380 to 770 nanometers and an excitation purity of less than 10%.

## Patentansprüche

1. Ultraviolett/Infrarot-absorbierendes Glas mit niedriger Durchlässigkeit, bestehend aus einem Grundglas, das
65 bis 80 Gew.-% SiO₂;
0 bis 5 Gew.-% Al₂O₃;
0 bis 10 Gew.-% MgO;
5 bis 15 Gew.-% CaO, wobei die Gesamtmenge von MgO und CaO zwischen 5 und 15 Gew.-% liegt;
10 bis 18 Gew.-% Na₂O;
0 bis 5 Gew.-% K₂O, wobei die Gesamtmenge von Na₂O und K₂O zwischen 10 und 20 Gew.-% liegt; und
0 bis 5 Gew.-% B₂O₃;
und Färbemittel, umfassend
1,1 bis 1,5 Gew.-% gesamtes Eisenoxid (T-Fe₂O₃), ausgedrückt als Fe₂O₃;
0,01 bis 0,019 Gew.-% CoO;
0,001 Gew.-% bis 0,003 Gew.-% Se; und
0,055,bis 0,1 Gew.-% NiO,
enthält, wobei das genannte Glas mit einer Dicke zwischen 2 und 5 mm eine Durchlässigkeit für sichtbares Licht (YA) durch den C.I.E.-Leuchtkörper "A" im Bereich von 10% bis 25%, eine Durchlässigkeit für Sonnenenergie (TG) im Bereich von 5% bis 20%, eine Ultraviolett-Durchlässigkeit (Tuv) von nicht mehr als 15%, spezifiziert durch ISO, hat.

2. Ultraviolett/Infrarot-absorbierendes Glas mit niedriger Durchlässigkeit nach Anspruch 1, **dadurch gekennzeichnet, dass** der Anteil von FeO, ausgedrückt als Fe₂O₃, zwischen 15 Gew.-% und 40 Gew.-% desjenigen von T-Fe₂O₃ ist.

3. Ultraviolett/Infrarot-absorbierendes Glas mit niedriger Durchlässigkeit nach Anspruch 1, **dadurch gekennzeichnet, dass** der Anteil von T-Fe₂O₃ zwischen 1,2 Gew.-% und 1,5 Gew.-% liegt.

4. Ultraviolett/Infrarot-absorbierendes Glas mit niedriger Durchlässigkeit nach Anspruch 1, **dadurch gekennzeichnet, dass** der Anteil von Se zwischen 0,001 Gew.-% und 0,0018 Gew.-% liegt.

5. Ultraviolett/Infrarot-absorbierendes Glas mit niedriger Durchlässigkeit nach Anspruch 1, **dadurch gekennzeichnet, dass** der Anteil von NiO zwischen 0,06 Gew.-% und 0,1 Gew.-% liegt.

6. Ultraviolett/Infrarot-absorbierendes Glas mit niedriger Durchlässigkeit nach Anspruch 1, **dadurch gekennzeichnet, dass** das genannte Färbemittel weithin CeO₂ in einer Menge von nicht größer als 2 Gew.-% und/oder TiO₂ in einer Menge von nicht größer als 2 Gew.-% umfasst.

7. Ultraviolett/Infrarot-absorbierendes Glas mit niedriger Durchlässigkeit nach Anspruch 1, **dadurch gekennzeichnet, dass** das Glas eine durch die folgenden C.I.E.L.A.B.-Koordinaten -10≤a*≤0 und -3≤b*≤7 definierte Farbe und eine fast neutrale Farbe, wie grünlich grau, hat.

8. Ultraviolett/Infrarot-absorbierendes Glas mit niedriger Durchlässigkeit nach Anspruch 1, **dadurch gekennzeichnet, dass** das Glas durch Luftstrahlkühlung verstärkt worden ist.

9. Ultraviolett/Infrarot-absorbierendes Glas mit niedriger Durchlässigkeit nach Anspruch 1, **dadurch gekennzeichnet, dass** der Anteil von Al₂O₃ zwischen 0,1 Gew.-% und 2 Gew.-% liegt.

10. Ultraviolett/Infrarot-absorbierendes Glas mit niedriger Durchlässigkeit nach Anspruch 8, **dadurch gekennzeichnet, dass** eine aus dem geschmolzenen Glas hergestellte Glasplatte 2 bis 5 Minuten lang auf 600 bis 750°C wiedererhitzt worden ist und dann durch Blasen von Luft mit einer Temperatur von 10 bis 30°C mit einer Abkühlungsrate von 100 bis 300°C/s beim Verstärkungsprozess abgekühlt worden ist.

11. Ultraviolett/Infrarot-absorbierendes Glas mit niedriger Durchlässigkeit nach Anspruch 6, **dadurch gekennzeichnet, dass** das Glas eine durch die folgenden C.I.E.L.A.B.-Koordinaten -5≤a*≤0 und 0≤b*≤5 definierte Farbe hat.

12. Ultraviolett/Infrarot-absorbierendes Glas mit niedriger Durchlässigkeit nach Anspruch 1, **dadurch gekennzeichnet, dass** das Glas eine Ultraviolettdurchlässigkeit von nicht größer als 10% hat.

13. Ultraviolett/Infrarot-absorbierendes Glas mit niedriger Durchlässigkeit nach Anspruch 1, **dadurch gekennzeichnet, dass** das Glas mit einer Dicke von 4 mm eine dominierende Wellenlänge von 480 bis 580 Nanometer bei Verwendung des C.I.E.-Standardleuchtkörpers "C" über den Wellenlängenbereich von 380 bis 770 Nanometer und Anregungsreinheit von weniger als 10% hat.

## Revendications

1. Verre à faible transmission absorbant les rayonnements ultraviolets et infrarouges consistant en un verre de base comprenant :
65 à 80% en poids de SiO₂ ;
0 à 5% en poids d'Al₂O₃ ;
0 à 10% en poids de MgO ;
5 à 15% en poids de CaO où la quantité totale de MgO et de CaO est comprise entre 5 et 15% en poids ;
10 à 18% en poids de Na₂O ;
0 à 5% en poids de K₂O, où la quantité totale de Na₂O et de K₂O est comprise entre 10 et 20% en poids ; et
0 à 5% en poids de B₂O₃,
et en colorants comprenant
1,1 à 1,5% en poids d'oxyde de fer total (T-Fe₂O₃) exprimé sous la forme de Fe₂O₃ ;
0,01 à 0,019% en poids de CoO ;
0,001% en poids à 0,003% en poids de Se ; et
0,05 à 0,1% en poids de NiO,
où ledit verre avec une épaisseur comprise entre 2 et 5 mm a une transmission de la lumière visible (YA) avec l'éclairement C.I.E. "A" comprise dans une gamme de 10% à 25%, une transmission de l'énergie solaire (TG) comprise dans une gamme de 5% à 20%, une transmission du rayonnement ultraviolet (Tuv) ne dépassant pas 15% suivant les spécifications ISO.

2. Verre à faible transmission absorbant les rayonnements ultraviolets et infrarouges suivant la revendication 1, dans lequel FeO exprimé sous forme de Fe₂O₃ représente entre 15% en poids et 40% en poids de T-Fe₂O₃.

3. Verre à faible transmission absorbant les rayonnements ultraviolets et infrarouges suivant la revendication 1, dans lequel T-Fe₂O₃ est compris entre 1,2% en poids et 1,5% en poids.

4. Verre à faible transmission absorbant les rayonnements ultraviolets et infrarouges suivant la revendication 1, dans lequel Se est compris entre 0,001% en poids et 0,0018% en poids.

5. Verre à faible transmission absorbant les rayonnements ultraviolets et infrarouges suivant la revendication 1, dans lequel NiO est compris entre 0,06% en poids et 0,1% en poids.

6. Verre à faible transmission absorbant les rayonnements ultraviolets et infrarouges suivant la revendication 1, dans lequel ledit colorant comprend de plus du CeO₂ en une quantité ne dépassant pas 2% en poids et/ou du TiO₂ en une quantité ne dépassant pas 2% en poids.

7. Verre à faible transmission absorbant les rayonnements ultraviolets et infrarouges suivant la revendication 1, dans lequel le verre a une couleur définie par les coordonnées C.I.E.L.A.B. suivantes : -10≤a*≤O et -3≤b*≤7 et une couleur presque neutre comme un gris verdâtre.

8. Verre à faible transmission absorbant les rayonnements ultraviolets et infrarouges suivant la revendication 1, dans lequel le verre est renforcé par un refroidissement par jet d'air.

9. Verre à faible transmission absorbant les rayonnements ultraviolets et infrarouges suivant la revendication 1, dans lequel Al₂O₃ est compris entre 0,1% en poids et 2% en poids.

10. Verre à faible transmission absorbant les rayonnements ultraviolets et infrarouges suivant la revendication 8, dans lequel la plaque de verre produite à partir du verre fondu est réchauffée jusqu'à une température de 600°C à 700°C pendant 2 à 5 minutes et ensuite refroidie par un jet d'air à une température de 10°C à 30°C à une vitesse de refroidissement de 100°C à 300°C/s lors du traitement de renforcement.

11. Verre à faible transmission absorbant les rayonnements ultraviolets et infrarouges suivant la revendication 6, dans lequel le verre a une couleur définie par les coordonnées C.I.E.L.A.B. suivantes : -5≤a*≤O et 0≤b*≤5.

12. Verre à faible transmission absorbant les rayonnements ultraviolets et infrarouges suivant la revendication 1, dans lequel le verre a une transmission de rayonnements ultraviolets ne dépassant pas 10%.

13. Verre à faible transmission absorbant les rayonnements ultraviolets et infrarouges suivant la revendication 1, dans lequel le verre avec une épaisseur de 4 mm a une longueur d'onde dominante de 480 à 580 nanomètres avec l'éclairement standard C.I.E. "C" sur la gamme de longueurs d'onde de 380 à 770 nanomètres et une pureté d'excitation inférieure à 10%.
